Europäisches Patentamt

European Patent Office

Office européen des brevets

(19)

(11) Veröffentlichungsnummer: **0 453 750 A2**

## (12) EUROPÄISCHE PATENTANMELDUNG

(21) Anmeldenummer: **91103963.4**

(51) Int. Cl.5: **B65D 88/72**, B65G 53/26

(22) Anmeldetag: **14.03.91**

(30) Priorität: **24.04.90 DE 4013061**

(43) Veröffentlichungstag der Anmeldung:
**30.10.91 Patentblatt 91/44**

(84) Benannte Vertragsstaaten:
**AT BE CH DE DK ES FR GB IT LI NL SE**

(71) Anmelder: **METRI AIRFLUID AG**
**Kesselbachstrasse 42**
**CH-9450 Altstätten(CH)**

(72) Erfinder: **Krämer, Erich**
**Hüllreuthstrasse 18**
**W-8626 Michelau(DE)**

(74) Vertreter: **Münzhuber, Robert, Dipl.-Phys. et al**
**Patentanwalt Rumfordstrasse 10**
**W-8000 München 5(DE)**

(54) **Einrichtung zum Fluidisieren von in einem Behälter befindlichen Pulver und Abführen fluidisierten Pulvers unmittelbar zu einer Sprühpistole einer elektrostatischen Pulverbeschichtungsanlage.**

(57) Es wird eine Einrichtung zum Fluidisieren von in einem Behälter befindlichen Pulver und Abführen fluidisierten Pulvers unmittelbar zu einer Sprühpistole einer elektrostatischen Pulverbeschichtungsanlage geschaffen die sicherstellt, daß der Sprühpistole ein von Klumpen und anderen übergroßen Partikeln vollständig befreites Pulver zugeführt wird. Zu diesem Zweck ist ein Siebkorb vorgesehen, der mit Abstand den in das Fluidbett eintauchenden Bereich der Ansaug- und Förderleitung, einschließlich der Ansaugöffnung, umschließt, wobei sich die Blasöffnungen der Fluidisiereinrichtung seitlich außerhalb des Siebkorbs und/oder unterhalb desselben befinden.

FIG. 1

EP 0 453 750 A2

Die Erfindung betrifft eine Einrichtung zum Fluidisieren von in einem Behälter befindlichen Pulver und Abführen fluidisierten Pulvers unmittelbar zu einer Sprühpistole einer elektrostatischen Pulverbeschichtungsanlage gemäß dem Oberbegriff des Patentanspruchs 1. Eine solche Einrichtung ist aus dem deutschen Gebrauchsmuster G 88 04 951 bekannt.

Mit der erwähnten bekannten Vorrichtung kann das Pulver unmittelbar aus dem Originalgebinde, also ohne die Erfordernis eines Zwischenbehälters, aufgenommen und der Sprühpistole zugeführt werden. Die Praxis hat nun gezeigt, daß diese Vorrichtung dann einwandfrei funktioniert, wenn das Pulver einwandfrei ist, d.h., keine Klümpchen, keine Fremdpartikel und keine die vorgegebene Durchschnitts-Korngröße wesentlich übersteigende Pulverteilchen beinhaltet. Nun kann es aber vorkommen, daß das im Originalgebinde befindliche Pulver beispielsweise durch überlange Lagerung oder durch Temperatureinflüsse, mit Pulverklümpchen versetzt ist, oder gar Partikel übermäßiger Korngröße enthält. Dies führt dann zu einer ungleichmäßigen Beschichtung des Werkstückes, was insbesondere dann qualitätsmindernd ist, wenn es sich um eine Deckbeschichtung (Finish-Beschichtung) handelt. Noch größer ist die Gefahr von unerwünschten Verklumpungen dann, wenn die Vorrichtung aus einem Behälter Pulver aufnimmt, das bereits versprüht worden ist, also beim Recycling zurückgewonnenes Pulver. In die zur Sprühpistole führende Absaug- und Förderleitung ein Filter erforderlicher Feinheit einzusetzen, sei es an der Absaugöffnung oder an irgendeiner anderen Stelle der Leitung, vermag dieses Problem nicht zu lösen, weil ein solches Filter, wie die Praxis gezeigt hat, bereits nach kürzester Zeit verstopft. Dabei ist zu berücksichtigen, daß bei diesen Vorrichtungen nur mit einem sehr geringen Saugzug gearbeitet wird und eine Erhöhung des Saugzugs zwecks Freihalten eines Filters die Aufnahme des Pulvers aus dem Fluidbett beträchtlich stören würde. Der Einbau einer Zwischenkammer mit Siebmaschine in die Absaug- und Förderleitung wäre zwar möglich, jedoch müßte dann das durch das Sieb der Siebmaschine hindurchgefallene Pulver erneut auffluidisiert und weitertransportiert werden. Damit würde der große Vorteil der unmittelbaren Aufnahme und Förderung des Pulvers aus dem Transportbehälter zur Sprühpistole mit seinem geringen konstruktiven Aufbau verloren gehen.

Aufgabe der vorliegenden Erfindung ist es deshalb, die Einrichtung der eingangs erwähnten Art so zu verbessern, daß unter Beibehaltung ihrer konstruktiven Einfachheit und ihrer Mobilität gewährleistet ist, daß zur Sprühpistole keine Pulverklümpchen und/oder übergroßen Partikel gelangen. Die Lösung dieser Aufgabe ergibt sich aus den kennzeichnenden Merkmalen des Patentanspruchs 1.

Durch den die Absaugöffnung mit Abstand umgebenden Siebkorb, der in das um ihn herum erzeugte Siebbett eintaucht, kommt es, wie Versuche gezeigt haben, selbst dann nicht zu Verstopfungen des Siebes, wenn dieses sehr feinmaschig ist. Der Grund dafür ist darin zu sehen, daß sich außen an das Sieb anlegende Pulverpartikel durch die Fluidisierluft sofort wieder wegbewegt werden, also nicht an den Siebdrähten haften und das Sieb damit zusetzen können.

Besonders zweckmäßige Ausgestaltungen der Erfindung sind in den Unteransprüchen gekennzeichnet.

Auf der Zeichnung sind Ausführungsformen der Erfindung beispielsweise dargestellt. Es zeigen:

Fig. 1    eine erste Ausführungsform im Vertikalschnitt, und zwar mit einer einzigen Absaug- und Förderleitung,

Fig. 2    eine Ansicht gemäß Fig. 1 einer Abwandlungsform,

Fig. 2A   eine Ansicht gemäß Fig. 2 im verkleinerten Maßstab mit zusätzlicher Darstellung des Pulverbehälters,

Fig. 3    eine Ansicht gemäß Fig. 1 einer Abwandlungsform,

Fig. 4    eine Ansicht gemäß Fig. 2 einer Abwandlungsform,

Fig. 5    eine zweite Ausführungsform mit zwei Ansaug- und Förderleitungen im Vertikalschnitt,

Fig. 6    eine Ansicht gemäß Fig. 5 einer Abwandlungsform,

Fig. 7    eine Ansicht gemäß Fig. 5 einer Abwandlungsform,

Fig. 8    eine Ansicht gemäß Fig. 5 einer Abwandlungsform und

Fig. 9    eine dritte Ausführungsform mit sechs Ansaug- und Förderleitungen im Vertikalschnitt.

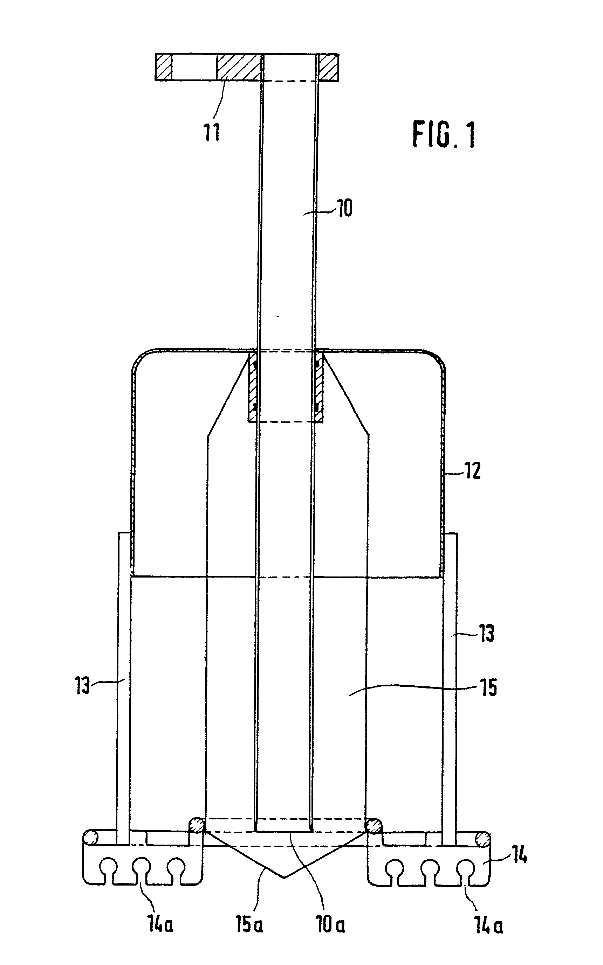

Die Ausführungsform von Fig. 1 weist eine einzige vertikale Ansaug- und Förderleitung 10 auf, die an ihrem untersten Ende eine Ansaugöffnung 10a bildet. An ihrem oberen Ende ist die Leitung 10 in einer Platte 11 gehalten, die beispielsweise der Tragarm einer - nicht gezeichneten - vertikalen Hubvorrichtung sein kann. Vom Oberende der Rohrendung 10 führt eine weitere Leitung, vorzugsweise Schlauchleitung, unmittelbar zu einer üblichen Pulversprühpistole. Am Rohr 10 ist ein unten offener Glockenkörper 12 befestigt, der an seiner Außenseite mehrere vertikale Druckluftrohre 13 trägt, die mit ihren Oberenden über eine ebenfalls nicht gezeichnete Schlauchleitung mit einer Druckluftquelle verbunden sind und an ihrem Unterende Fluidisierringe 14 mit Druckluftauslaßöffnungen 14a tragen. Selbstverständlich genügt es, wenn eines der Rohre 13 druckluftführend ist, die anderen Rohre 13 dagegen nur zum Tragen des Fluidisierrings 14 dienen. Eine andere Möglichkeit besteht darin, die Oberenden der Rohre 13 durch ein Ringrohr zu verbinden, das dann seinerseits an die Druckluftquelle angeschlossen ist.

An der Rohrleitung 10 ist ein im wesentlichen zylindrischer Siebkorb 15 befestigt, der den unteren Bereich der Rohrleitung 10, einschließlich der Ansaugöffnung 10a, mit Abstand umgibt, wobei seine untere Stirnfläche 15a als mit seiner Spitze nach unten weisender Flachkegel ausgebildet ist. Wesentlich ist dabei, daß sich die Fluidisieröffnungen 14a außerhalb des Siebkorbs 15 befinden, und zwar seitlich von diesem in einer Pegelhöhe unmittelbar unter derjenigen der untersten Stelle (Kegelspitze) des Siebkorbs 15.

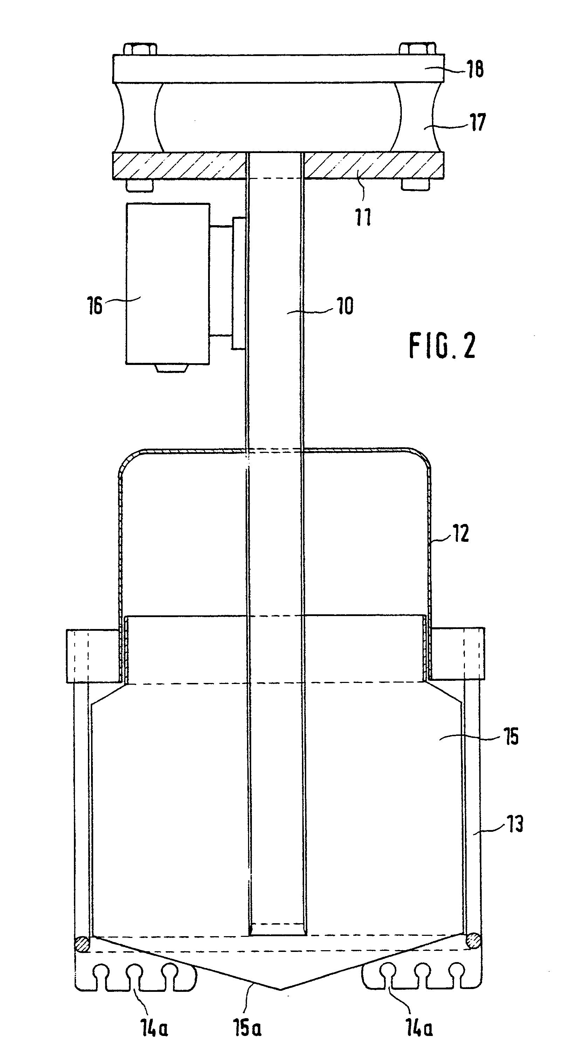

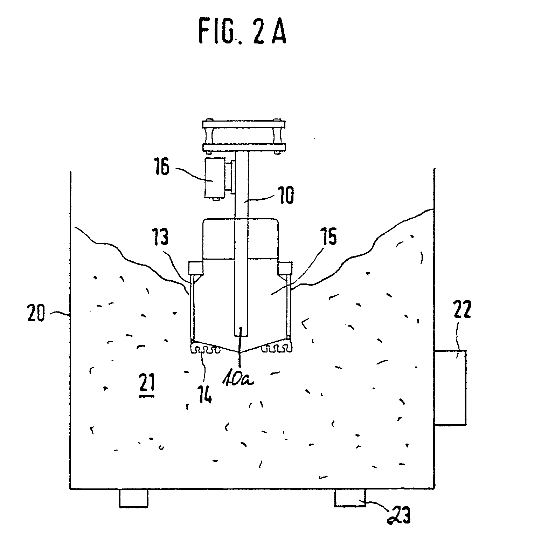

Fig. 2 zeigt eine Abwandlungsform der Vorrichtung von Fig. 1. Dabei besteht die Abwandlung zum einen darin, daß der Siebkorb 15 (Fig. 2) einen wesentlich größeren Durchmesser und damit Innenraum hat als derjenige der Fig. 1. Dabei ist der Siebkorb 15 hier an der Glocke 12 befestigt. Die Blasluftöffnungen 14a befinden sich in der Pegelhöhe der untersten Stelle (Kegelspitze) des Ansaug- und Förderrohrs 10 unterhalb des äußeren Bereichs des siebkorbs 15, wie dies aus der Zeichnung klar ersichtlich ist. Dieser vergleichsweise große Siebkorb 15 eignet sich besonders für den Fall, wie später noch erläutert werden wird, daß der Siebkorb sehr feinmaschig sein soll. Die weitere Abwandlung gegenüber der Ausführungsform von Fig. 1 besteht darin, daß am Rohr 10 oberhalb der Glocke 12 ein Vibrator 16 angeflanscht ist, wobei dann die Halteplatte 11 über schwingungsdämpfende Puffer 17 mit einer zweiten Halteplatte 18 verbunden ist. In diesem Fall wird die zweite Halteplatte 18 mit dem Tragarm einer nicht-gezeichneten Hubvorrichtung verbunden bzw. stellt diesen dar.

Die Betriebweise der anhand der Fig. 1 und 2 beschriebenen Vorrichtung wird nun unter Bezugnahme auf Fig. 2A erläutert. Dabei ist mit 20 ein oben offener Pulverbehälter bezeichnet, der mit Pulver 21 gefüllt ist. Ferner ist an der Außenseite des Behälters 20 ein Vibrator 22 angebracht und der Behälter steht auf schwingungsdämpfenden Füßen 23. Zum Fluidisieren und Abfördern des Pulvers 21 unmittelbar zu einer Pulversprühpistole wird die im wesentlichen aus Ansaugleitung 10 (Pumpe oder Injektor), Fluidisierringen 14, Siebkorb 15 und Vibrator 16 bestehende Einheit von oben her in das Pulver 21 eingebracht. Die aus den Blasöffnungen 14a der Fluidisierringe 14 austretende Druckluft bewirkt eine räumlich begrenzte (partielle) Fluidisierung des Pulvers 21 um den eingetauchten Teil der Einheit herum, wobei dann fluidisiertes Pulver durch den Siebkorb 15 hindurch zur Ansaugöffnung 10a strömt und innerhalb des Rohrs 10 nach oben geführt wird. Das Eintauchen des Siebs 15 in die Pulvermasse und das Durchlässighalten des Siebs werden dadurch unterstützt, daß der Vibrator 16 den Siebkorb 15 zu Vibrationen erregt. Das Zuführen von noch nicht fluidisiertem Pulver, insbesondere vom seitlichen Randbereich (Kraterrand) her, zum Fluidisierbereich wird dadurch unterstützt, daß der Vibrator 22 die Pulvermasse 21 in Schwingung versetzt. Mit fortschreitender Pulverabsaugung wird die erwähnte Einheit selbsttätig immer tiefer im Behälter 20 abgesenkt.

Die Einzelheiten der Arbeitsweise sowie die Vorteile der aus Ansaug- und Förderleitung 10, Druckluftleitung 13 und Fluidisierringen 14 bestehenden Einheit erübrigt sich, weil diese Einheit, wie eingangs erwähnt, bereits vorbekannt ist. Zum erfindungsgemäßen Siebkorb 15 ist zu sagen, daß dieser den unteren Bereich des Rohrs 10 und die Ansaugöffnung 10a mit Abstand umschließen muß, weil nur so eine Verstopfung des Siebgewebes vermieden wird. Je feiner das Siebgewebe ist, um so größer muß der Siebkorb sein; so kann bei einem mittelfeinen Sieb mit einer Siebkorbgröße gemäß Fig. 1 ausgekommen werden, wohingegen bei sehr feinen Sieben ein Korb gemäß Fig. 2 vorzuziehen ist. Weiterhin ist die Lage der Blasluftöffnungen 14a der Fluidisierringe 14 relativ zum Korb 15 von Bedeutung. Die Blasluftöffnungen 14a dürfen nicht innerhalb des Siebkorbs 15 liegen, sondern müssen sich außerhalb desselben befinden, und zwar in einer Höhe gleich derjenigen der untersten Stelle des Siebkorbs oder unmittelbar darunter.

Bei einem Siebkorb 15 mit vergleichsweise geringem Durchmesser, also einem Siebkorb gemäß Fig. 1, können die Blasluftöffnungen 14a seitlich des Siebkorbs angeordnet sein; hat dagegen der Siebkorb einen beträchtlichen Durchmesser, wie dies in Fig. 2 dargestellt ist, dann ist eine Anordnung gemäß Fig. 2 vorzuziehen, weil bei einer ausschließlich seitlichen Anordnung der Blasluftöffnungen es zu einer ungenügenden Pulverfluidisierung unter der Ansaugöffnung 10a kommen könnte. Bei ausreichender Dimensionierung des Siebkorbs 15 und der erwähnten Anordnungen der Fluidisierringe relativ zum Siebkorb besteht kaum Gefahr, daß der Siebkorb nach kürzerer oder längerer Betriebszeit verstopft. Um aber das Eindringen des Pulvers in den Siebkorb zu erleichtern, kann es vorteilhaft sein, das Sieb 15 vibrieren zu lassen, etwa durch den Vibrator 16 von Fig. 2. Dabei sind keine großen Anregungsenergien erforderlich, jedoch ist es zweckmäßig, wenn die Vibration allseitig ist, also keine bestimmte Vorzugsrichtung hat. Auf diese Weise wird nämlich zusätzlich die Sicherheit gegen Siebverstopfungen erhöht. Der weitere, in Fig. 2A gezeigte Vibrator 22 zur Anregung des Behälter-Pulver-Körpers ist an sich bekannt und dient dazu, die beim Betrieb sich ergebenden seitlichen Pulver-Kraterränder sozusagen zum Einsturz zu bringen; anders ausgedrückt, es soll das Pulver der Randzonen dem Fluidisierbereich zugeführt werden. Ausdehnte Versuche haben aber nun folgendes ergeben. Wird die Pulvermasse durch den Vibrator 22 in eine allseitige Vibration versetzt, wie dies beim Vibrieren des Siebkorbs 15 erwünscht ist, dann ergibt sich die Gefahr einer Entmischung und/oder Verfestigung der Pulvermasse. Der Grund dafür sind die vertikalen Vibrationsanteile. Es ist deshalb vorzuziehen, daß der Vibrator 22 das Pulver 21 ausschließlich zu horizontalen Schwingungen erregt; dadurch wird das Pulver der Randzonen dem Fluidisierbereich zugeführt, ohne daß es jedoch zu Verfestigungen oder Entmischungen kommt. Weiterhin hat sich ergeben, daß dann, wenn aufgrund der Vibratoren 16 und 22 sowohl der Siebkorb 15 vibriert als auch die Pulvermasse schwingt, es zur Vermeidung von Interferenzen zweckmäßig ist, wenn Siebkorb und Pulvermasse mit unterschiedlichen Frequenzen vibrieren bzw. schwingen. Beispielsweise könnte die Pulvermasse mit 50 Hz, also der Netzfrequenz, schwingen, der Siebkorb 15 mit z.B.60 Hz vibrieren. Für die konstruktive Anbringung der Vibratoren 16, 22 gibt es mehrere Möglichkeiten. So kann der Vibrator 16, wie in Fig. 2 dargestellt, am Rohr 10 angebracht werden, womit dann also die gesamte Einheit 10, 13, 14, 15 vibriert. Es ist aber auch möglich, nur den Siebkorb 15 vibrieren zu lassen, wobei dann der Vibrator 16 am Siebkorb angebracht und der Siebkorb über Schwingungsdämpfer am Rohr 10 befestigt wird. Der Vibrator 22 kann direkt am Behälter 20 angebracht werden, aber auch an einem Aufnahmebehälter, in welchen der Behälter 20 eingesetzt wird, oder aber an einem Schwingtisch, auf den man den Behälter 20 stellt.

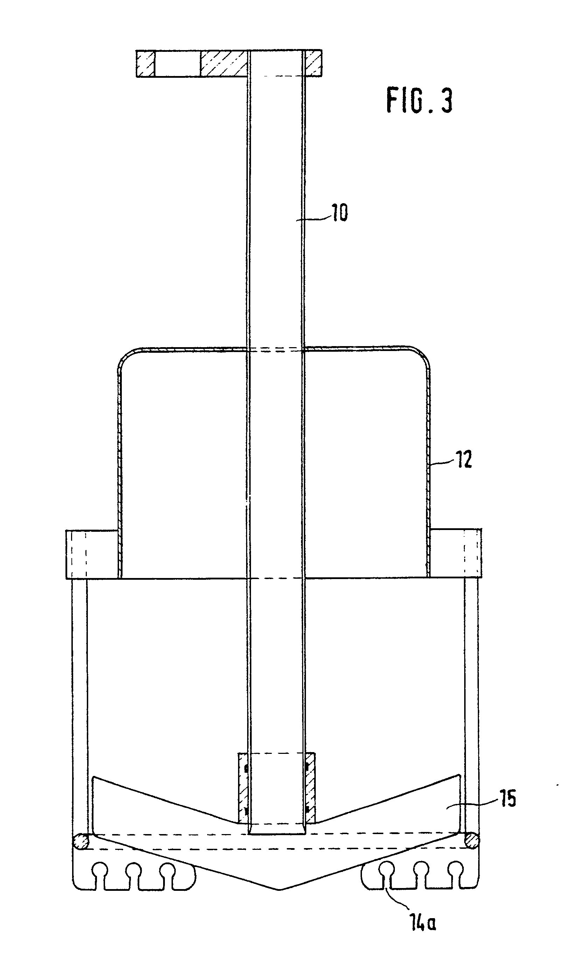

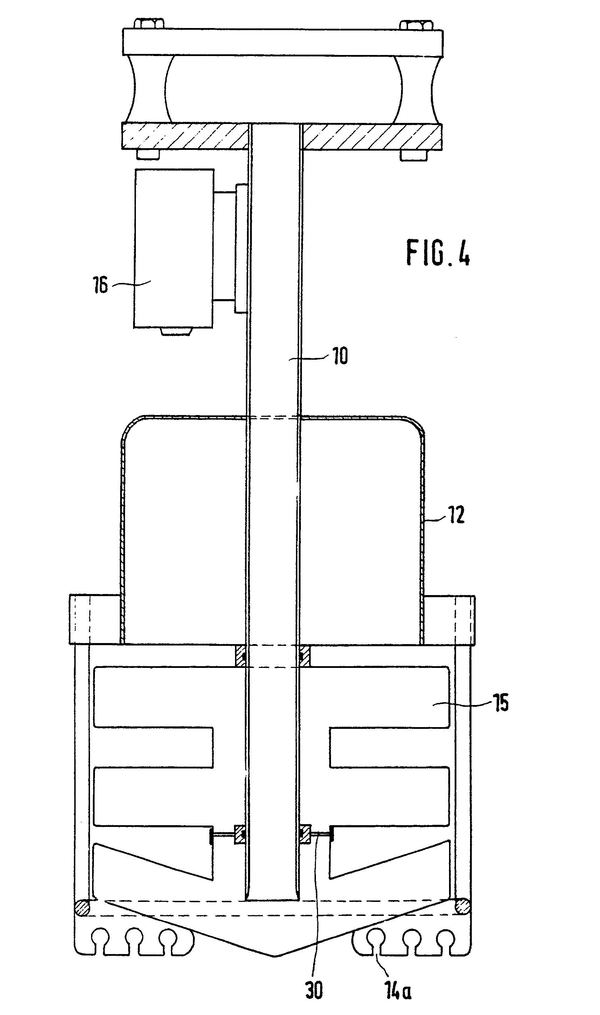

Die Figuren 3 und 4 zeigen andere Gestaltungsformen der Siebkörbe 15. So hat der Siebkorb 15 von Fig. 3 die Form eines flachen Zylinders mit kegelförmiger Boden- und Deckfläche. Dieser Siebkorb dringt besonders gut in die Pulvermassen ein. Der Siebkorb 15 von Fig. 4 zeichnet sich durch eine besonders große Oberfläche aus; er ist aus mehreren "Rippen" aufgebaut, die jedoch untereinander am Rippengrund (um das Rohr 10 herum) in Verbindung stehen, wobei die Außengestalt mit derjenigen eines Rippenkühlers in etwa vergleichbar ist. Die bei 30 gezeigte Siebhalterung besteht lediglich aus Streben, so daß der erwähnte Durchgang im Bereich um das Rohr 10 herum gewährleistet ist.

Grundsätzlich ist zur Form und Größe des Siebkorbs zu sagen, daß das Siebnetz - wie bereits vorab erwähnt - um so feiner sein kann, je größer die Oberfläche des Siebkorbs 15 ist.

Formen mit großer Oberfläche, wie etwa die Form des Siebkorbs von Fig. 4, sind deshalb sehr zweckmäßig. Andererseits soll der Siebkorb 15 zumindest dann nicht zu groß bemessen sein, wenn die Einrichtung zum Fördern aus vergleichsweise kleinen Behältern dient. Hier sind also entsprechende Abwägungen erforderlich.

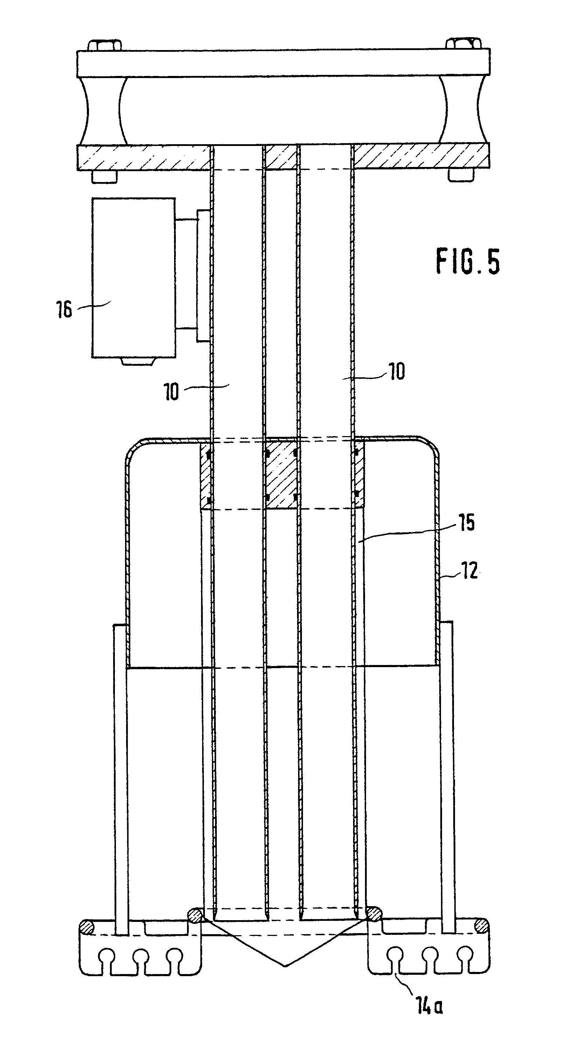

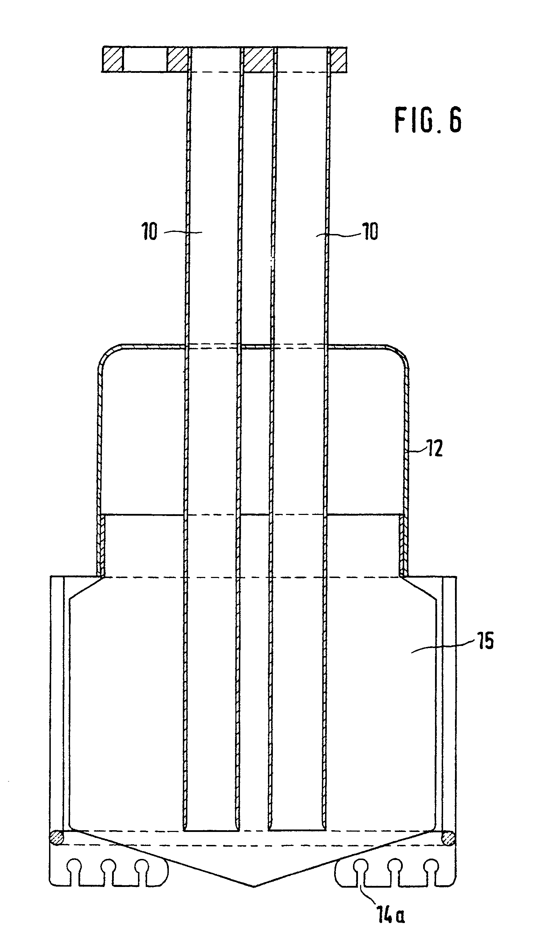

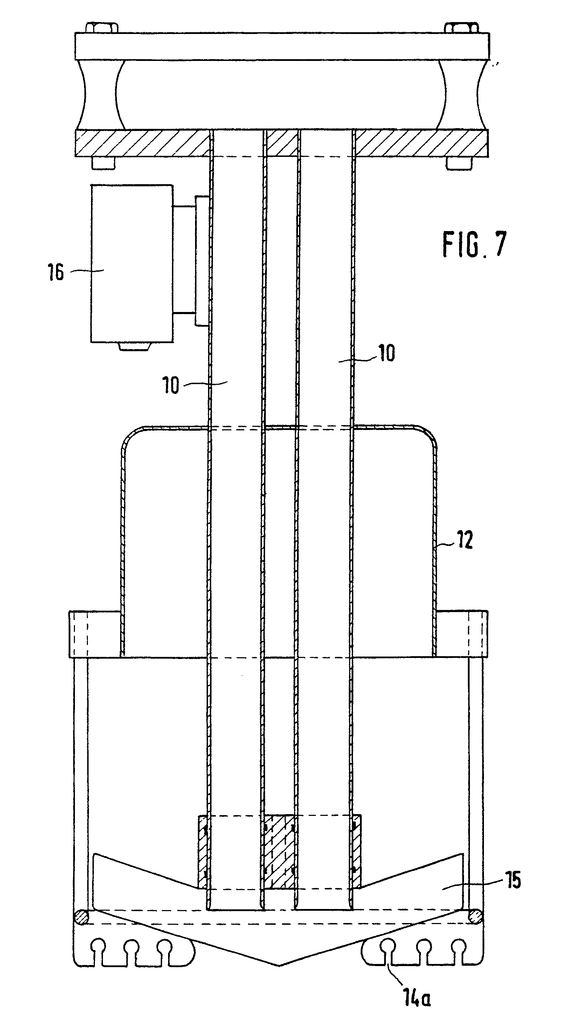

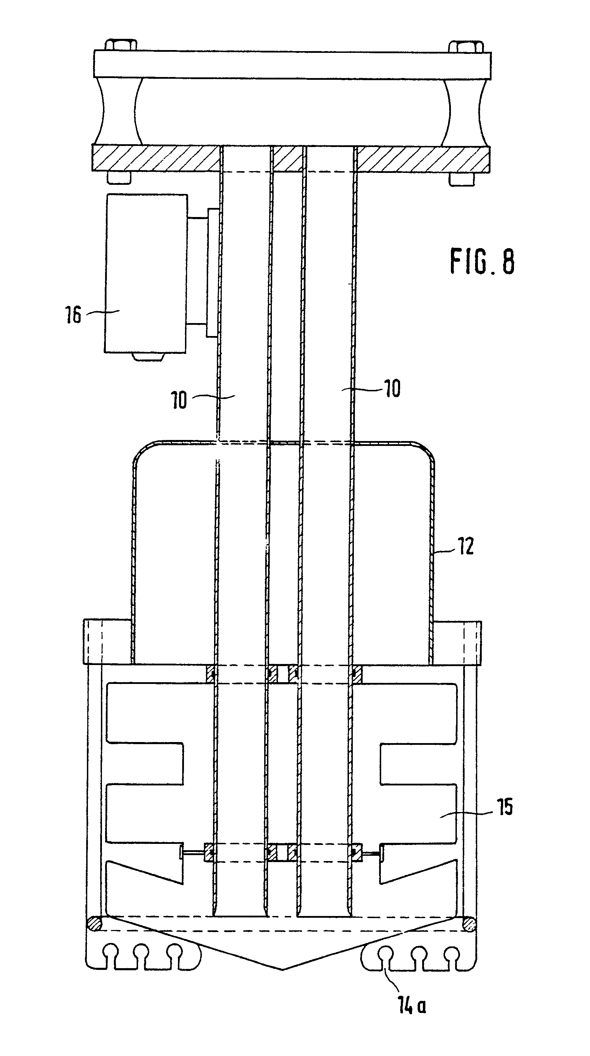

Es kommt häufig vor, daß bei den Vorrichtungen der hier interessierenden Art nicht nur ein Ansaug- und Förderrohr 10 sondern zwei derartige Rohre in Tandemanordnung zur Speisung von zwei Pulversprühpistolen vorgesehen sind. Selbstverständlich könnte man nun an jedem dieser Rohre einen gesonderten Siebkorb anbringen, jedoch hat sich dies als wenig zweckmäßig herausgestellt, insbesondere wenn die beiden Ansaug- und Förderrohre nur einen geringen Abstand zueinander haben. Die Figuren 5 bis 8 zeigen nun Vorrichtungen mit zwei Ansaug- und Förderrohren 10 in Tandemanordnung und gemeinsamen Siebkorb 15. Dabei entspricht der Siebkorb 15 von Fig. 5 in etwa demjenigen von Fig. 1, der von Fig. 6 demjenigen von Fig. 2, der von Fig. 7 demjenigen von Fig. 3 und schließlich der von Fig. 8 demjenigen von Fig. 4; die Zeichnungen verstehen sich offensichtlich aus sich selbst heraus, so daß besondere Erläuterungen nicht erforderlich sind.

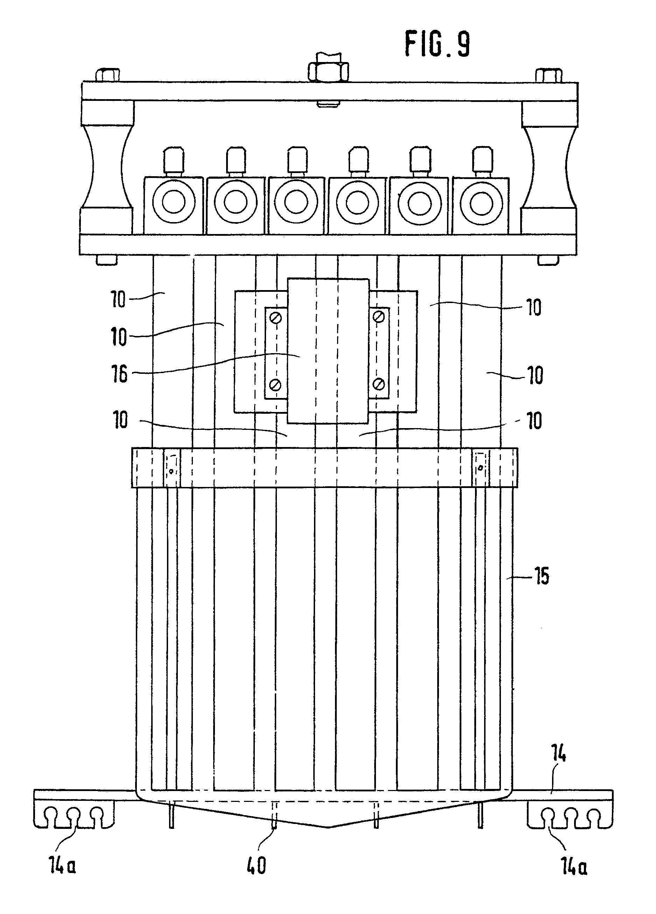

Fig. 9 schließlich zeigt eine Einrichtung mit sechs Ansaug- und Förderrohren 10, die von einem gemeinsamen Siebkorb 15 umschlossen sind. Aufgrund des relativ großen Durchmessers des Siebkorbs 15 ist besonders auf eine geeignete Anordnung der Fluidisierringe 14 bzw. der Blasluftöffnungen 14a zu achten, wobei zur Erzeugung eines gleichmäßigen Fluidbetts und einer gleichmäßigen Abförderung des Pulvers durch die sechs Rohre 10 zusätzliche Leitbleche 40 vorgesehen sein können. Die Anordnung der Rohre 10 kann dabei in einer Reihe erfolgen, wie dies in Fig. 9 dargestellt ist, wobei dem Siebkorb 15 dann ein angepaßter, langgestreckt elliptischer Querschnitt gegeben wird, oder aber die Rohre 10 werden in Art eines Bündels angeordnet, wobei dann der Korb 15 kreiszylindrisch sein kann. Eine Anordnung, wie sie in Fig. 9 dargestellt ist, eignet sich besonders zur Speisung von Beschichtungskabinen mit einer größeren Anzahl von Sprühpistolen.

Selbstverständlich ist die Erfindung nicht auf die dargestellten Ausführungsformen beschränkt, sondern es sind diesen gegenüber zahlreiche weitere Abwandlungen möglich, wie dies bezüglich der Form, Größe und Anordnung des Siebkorbs und der Anordnung der Vibratoren bereits herausgestellt worden ist. Es ist aber auch nicht erforderlich, daß Ansaug- und Förderleitung 10, Fluidisiereinrichtung 13, 14, 14a und Siebkorb 15 eine integrale Einheit darstellen; so ist es beispielsweise durchaus möglich, Siebkorb 15 und Fluidisiereinrichtung 13, 14, 14a als Einheit vorab in die Pulvermasse einzuführen und dann erst das von dieser Einheit getrennte Rohr 10 gesondert einzufahren. Auch ist die Anzahl der Saugrohre beliebig.

Mit der Erfindung wird die Gewähr geschaffen, daß das abgeförderte Pulver klumpenfrei und frei von übergroßen Partikeln und von Verunreinigungen und Flusen ist, wobei es auch dann nicht zu Förderstörungen infolge Siebkorbverstopfungen kommt, wenn mit sehr feinen Sieben und/oder mit wenig Fluidisierluft und/oder mit wenig Saugzug gearbeitet wird.

**Patentansprüche**

1. Einrichtung zum Fluidisieren von in einem Behälter befindlichen Pulver und Abführen fluidisierten Pulvers

   zu einer Sprühpistole einer elektrostatischen Pulverbeschichtungsanlage, mit einer von oben her in den Behälter eintauchenden Absaug- und Förderleitung und einer ebenfalls von oben her in den Behälter eintauchenden Druckluftleitung, die Blasöffnungen zum Erzeugen eines räumlich begrenzten Pulver- Fluidbetts aufweisen, dadurch gekennzeichnet, daß der in das Pulver-Fluidbett eintauchende Bereich der Ansaugleitung (10) einschließlich ihrer Ansaugöffnung (10a) mit Abstand von einem Siebkorb (15) umschlossen ist und daß die Blasöffnungen (14a) der Druckluftleitung (13) sich seitlich außerhalb des Siebkorbs (15) und/oder unterhalb desselben befinden.

2. Einrichtung nach Anspruch 1, gekennzeichnet durch einen Vibrator (16) zum Vibrieren des Siebkorbs (15).

3. Einrichtung nach Anspruch 1 oder 2, dadurch gekennzeichnet, daß der Siebkorb (15) an der Ansaug- und Förderleitung (10) befestigt ist.

4. Einrichtung nach Anspruch 3, dadurch gekennzeichnet, daß Ansaug- und Förderleitung (10), Fluidisiereinrichtung (13, 14, 14a) und Siebkorb (15) zu einer Einheit integriert sind.

5. Einrichtung nach einem der Ansprüche 1 bis 4, dadurch gekennzeichnet, daß der Siebkorb (15) die Form eines Zylinders mit kegelförmiger Bodenfläche, deren Spitze (15a) nach unten weist, hat.

6. Einrichtung nach einem der Ansprüche 1 bis 5, dadurch gekennzeichnet, daß der Siebkorb (15) eine zerklüftete Oberfläche aufweist, vorzugsweise in Art von Rippen.

7. Einrichtung nach einem der Ansprüche 1 bis 6, dadurch gekennzeichnet, daß das Siebkorbvolumen im umgekehrten Verhältnis zur Feinheit des Siebes bemessen ist.

8. Einrichtung nach einem der Ansprüche 1 bis 7, gekennzeichnet durch schwingungsdämpfende Verbindungsglieder (17).

9. Einrichtung mit mehreren zueinander parallelen Ansaug- und Förderleitungen nach einem der Ansprüche 1 bis 8, dadurch gekennzeichnet, daß ein gemeinsamer, alle Ansaug- und Förderleitungen (10) umschließender Siebkorb (15) vorgesehen ist.

10. Einrichtung nach einem der Ansprüche 1 bis 9, gekennzeichnet durch einen Vibrator (22) zum Versetzen der Pulvermasse in horizontale Schwingungen.

11. Einrichtung nach Anspruch 10, dadurch gekennzeichnet, daß der vom ersten Vibrator (16) angetriebene Siebkorb (15) in einer anderen Frequenz vibriert als der Schwingungsfrequenz der vom zweiten Vibrator (22) angetriebenen Pulvermasse.

FIG.1

FIG.2

# FIG. 2 A

FIG.3

10

12

15

14a

FIG.4

FIG.5

16

10

10

15

12

14a

FIG. 6

FIG. 7

16

10

10

12

15

14a

FIG. 8

FIG.9